# FASCICULE DE BREVET EUROPEEN

(11) **EP 2 598 392 B1**
(45) Date de publication et mention de la délivrance du brevet: **03.05.2017**
(21) Numéro de dépôt: 11752342.3
(22) Date de dépôt: 26.07.2011
(51) Int. Cl.: B61D 3/18, B61D 45/00, B61D 47/00

(54) **SYSTÈME UNIVERSEL DE CHARGEMENT / DÉCHARGEMENT ET DE TRANSPORT FERROVIAIRE DE SEMI-REMORQUES ROUTIÈRES**
UNIVERSELLES SYSTEM FÜR LADEN/ENTLADEN UND SCHIENENTRANSPORT FÜR SATTELANHÄNGER
UNIVERSAL SYSTEM FOR THE LOADING/UNLOADING AND RAIL TRANSPORT OF ROAD SEMITRAILERS

(30) Priorité: 30.07.2010 FR 1003235
(43) Date de publication de la demande: 05.06.2013
(73) Titulaire: Lohr Industrie, 67980 Hangenbieten (FR)
(72) Inventeur: ANDRE, Jean-Luc, F-67120 Molsheim (FR); OBER, Jacques, F-67000 Strasbourg (FR)
(74) Mandataire: Merckling, Norbert
(86) Numéro de dépôt international: PCT/IB2011/053322
(87) Numéro de publication internationale: WO 2012/014150

(56) Documents cités:
- EP-A1- 1 712 444
- DE-A1- 3 234 375
- US-A- 4 425 064

## Description

La présente invention se rapporte à un système universel de chargement / déchargement et de transport ferroviaire de semi-remorques routières.

Afin de limiter l'encombrement des routes et autoroutes ainsi que la pollution générée par le transport routier, on souhaite de plus en plus, développer le transport ferroviaire des semi-remorques qui consiste à charger et arrimer les semi-remorques dans des wagons spéciaux et à les transporter sur de longues distances sur des voies ferrées et non plus sur le réseau routier.

Pour cela, les semi-remorques doivent actuellement être chargées et déchargées selon différentes techniques dans des terminaux mixtes routiers et ferroviaires, spécialement équipés pour réaliser de telles opérations. Des infrastructures spécifiques et onéreuses doivent être prévues au niveau des quais pour procéder au chargement et au déchargement de ces semi-remorques.

De plus, les trains utilisés pour un tel transport sont également très particuliers. Ils sont formés de wagons spécialisés pour le transport de ce type de chargement et qui en plus, doivent s'ouvrir pour permettre le chargement et le déchargement des semi-remorques. Ces wagons sont complexes et également très coûteux.

Différents systèmes d'ouverture sont connus pour ces wagons spécialisés. Une des techniques possibles consiste à utiliser des wagons constitués d'une base roulante et d'une structure ferroviaire porteuse susceptible de se dissocier de sa base roulante par pivotement, ce pivotement pouvant être central ou se faire au niveau de l'une de ses extrémités.

Le pivotement central offre la possibilité d'un accès ou d'une sortie par l'une ou l'autre des extrémités alors que le pivotement autour d'une des extrémités ne laisse qu'une extrémité libre pour l'entrée et la sortie des semi-remorques avant et après leur transport.

D'autres modes d'ouverture sont également possibles, comme par exemple la translation latérale de la structure ferroviaire porteuse.

Tous ces systèmes présentent l'inconvénient d'être complexes et onéreux. Les wagons spécialisés doivent être motorisés et doivent être capables de fournir l'énergie nécessaire à leur mouvement d'ouverture et de fermeture alors que leur structure porteuse est chargée de semi-remorques. En outre, ces wagons spécialisés doivent être complétés par des équipements spécifiques complémentaires se trouvant au sol dans les gares spécialisées pour procéder au chargement et au déchargement des semi-remorques.

Tous ces investissements nécessaires, que ce soit au niveau des wagons ou des infrastructures au sol, expliquent la lenteur du développement du transport ferroviaire des semi-remorques alors qu'il est ardemment souhaité d'un point de vue social, écologique, économique et politique.

On connaît déjà quelques systèmes de chargement et de déchargement de semi-remorques sur et à partir d'un wagon en vue de son transport ferroviaire.

Il s'agit tout d'abord du brevet américain US n° 4,425,064 au nom de WALDA qui concerne un plateau pivotant porté par le wagon et recevant le train de roues d'une semi-remorque et sa fixation à un support portant une sellette.

Ce plateau est pivotant entre une position de roulage dans laquelle il se trouve dans l'axe longitudinal du wagon et une position de chargement-déchargement dans laquelle il se trouve pivoté par rapport au wagon.

Le wagon comporte également vers l'avant une plateforme supportant un ensemble articulé formé de bras obliques articulés sur les extrémités desquels est montée une sellette de semi-remorque supportant l'avant d'une semi-remorque par son pivot d'attelage. Les bras articulés sont des bielles dont l'inclinaison permet à la sellette de passer d'une position basse de repos à une position haute de support de la semi-remorque par sa partie avant lors de son transport ferroviaire.

Si l'on trouve bien dans cette invention une structure porteuse pivotante sur le wagon destinée à recevoir le train roulant de la semi-remorque, la sellette articulée à l'ensemble d'élévation ne peut être amovible comme dans le cas de la présente invention et par conséquent non manipulable par un engin de manutention et non utilisable posée sur la semi-remorque en vue du réglage et de sa mise en place sur le wagon.

Il s'agit aussi de l'invention décrite dans le brevet européen EP n° 1712444 au nom d'ARBEL FAUVET RAIL.

Selon ce brevet, on charge la semi-remorque dans une nacelle porteuse 4 et on l'immobilise sur celle-ci latéralement par des moyens d'accrochage 24 et 25 et à l'avant par des moyens de bridage 6 de l'attelage 7. La nacelle porteuse 4 vient s'appuyer et se fixer sur les longerons des bords longitudinaux d'un wagon du type dit wagon poche.

Les moyens de bridage 6 de l'attelage 7 sont regroupés sous la forme d'un ensemble de support 1 détachable de la nacelle 4 par un mouvement de coulissement longitudinal sur l'extrémité de son plancher. Cet ensemble de support 1 comporte fixée en partie supérieure, une sellette qui coopère avec le pivot d'attelage de la semi-remorque.

Pour être opérationnel, cet ensemble de support 1 doit être monté à l'extrémité avant de la nacelle. Des moyens de commande permettent de régler la sellette en hauteur.

Cependant, seul l'ensemble de support est détachable par un simple mouvement longitudinal de dissociation et on ne peut régler la hauteur de la sellette que lorsque cet ensemble de support est en place ce qui complique sérieusement les opérations de mise en place et de soutien de l'avant de la semi-remorque et le chargement et le déchargement de celle-ci dans le wagon.

On connaît finalement par la publication DE 3234375 au nom de WAGGON FABRIK TALBOT un autre système de chargement et de déchargement pour une semi-remorque dans ou à partir d'un wagon du type wagon poche. Ce système comprend un plateau basculant et pivotant qui reçoit le train roulant de la semi-remorque et l'immobilise par affaissement contrôlé dans le wagon. Le pivot d'attelage de la semi-remorque vient s'engager dans un ensemble d'élévation permettant de soulever l'avant de la semi-remorque pour être reprise par une plateforme de soutien. L'équivalent d'une sellette fait partie de l'ensemble d'élévation, mais celle-ci n'est nullement amovible et ne sert pas à la mise en place de la semi-remorque sur le wagon à l'aide d'un engin de manutention.

On retrouve toutes les difficultés de manoeuvre de la semi-remorque au moment et lors de sa mise en place sur le wagon et son enlèvement.

Le but de la présente invention est de fournir un système de chargement / déchargement et de transport ferroviaire pour semi-remorques qui soit beaucoup plus simple et moins coûteux que les systèmes actuels.

Les wagons utilisés sont de construction très simple et sont préférentiellement non motorisés. Ils sont donc beaucoup moins coûteux que ceux de l'art antérieur.

Le système selon l'invention ne requiert ni quai spécialisé, ni équipement spécifique au sol. N'importe quelle gare ou zone équipée d'un quai peut être utilisée pour procéder au chargement et au déchargement des semi-remorques.

Le système n'a pas besoin d'être motorisé et ne nécessite donc pas de source d'énergie au niveau du wagon ou sur le quai de chargement / déchargement. Seul un engin de manutention, par exemple de type chariot élévateur à fourche, est nécessaire pour procéder au chargement ou au déchargement des semi-remorques et pour faire passer le système de sa position de chargement / déchargement à sa position de transport et inversement, un tel engin de manutention étant extrêmement courant et faisant partie de l'équipement de base de toutes les gares utilisées pour le fret et le transport de marchandises.

Le système est en outre universel, c'est-à-dire qu'il s'adapte à tout type de semi-remorque routière quels que soient sa nature, son modèle et sa longueur, du moment qu'elle comporte un train de roues à l'arrière et un pivot d'attelage à l'avant, la distance entre les deux pouvant être différente selon les pays et les règlements routiers en vigueur.

De plus, il permet une grande facilité et rapidité de chargement et de déchargement. En effet, toutes les semi-remorques transportées par le système selon l'invention peuvent être chargées ou déchargées les unes après les autres ou simultanément par groupes ou toutes ensembles, dans un ordre quelconque, en fonction des souhaits des utilisateurs et/ou du nombre d'engins de manutention présents.

Pour cela, l'invention fournit un système universel de chargement / déchargement et de transport ferroviaire de semi-remorques routières, qui comprend au moins un wagon ferroviaire faisant partie d'un train et un support pour le pivot d'attelage d'une semi-remorque, ce wagon comportant un châssis et est destiné à recevoir pour son transport ferroviaire au moins la semi-remorque routière équipée à l'avant du pivot d'attelage et à l'arrière d'un train de roues.

Selon l'invention, ce wagon comprend :
- au moins un plateau porteur pivotant par rapport au châssis, qui est adapté pour recevoir le train de roues de la semi-remorque, ce plateau porteur pivotant entre une position de transport dans laquelle il est orienté longitudinalement par rapport au wagon et une position de chargement / déchargement dans laquelle il est orienté transversalement ou en biais par rapport au wagon ; et
- au moins une plateforme de réception destinée à supporter le pivot d'attelage de la semi-remorque, cette plateforme de réception étant liée ou intégrée au châssis, étant fixe par rapport à celui-ci et étant indépendante du plateau porteur pivotant.

Le système selon l'invention comprend également un support de sellette amovible qui comporte :
- un corps, préhensible par un engin de manutention et qui se monte de façon amovible sur la plateforme de réception du wagon, et
- une sellette, préférentiellement de hauteur réglable par rapport au corps, adaptée pour recevoir et immobiliser le pivot d'attelage de la semi-remorque.

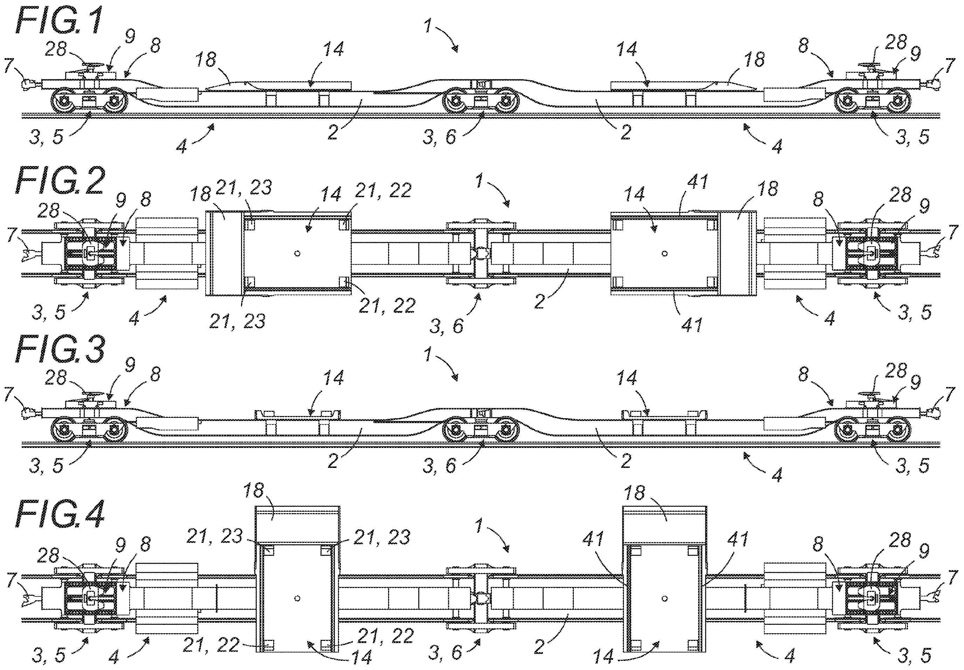

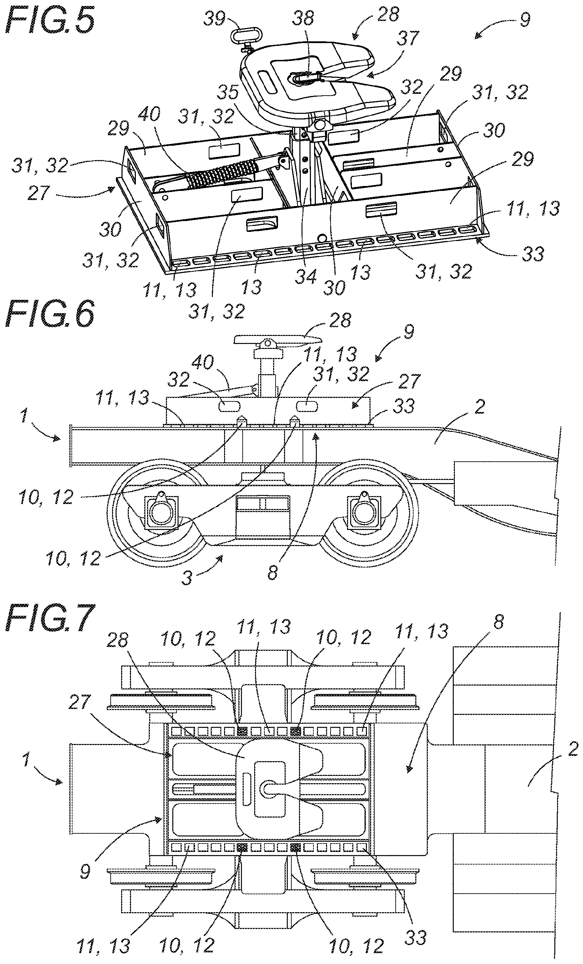

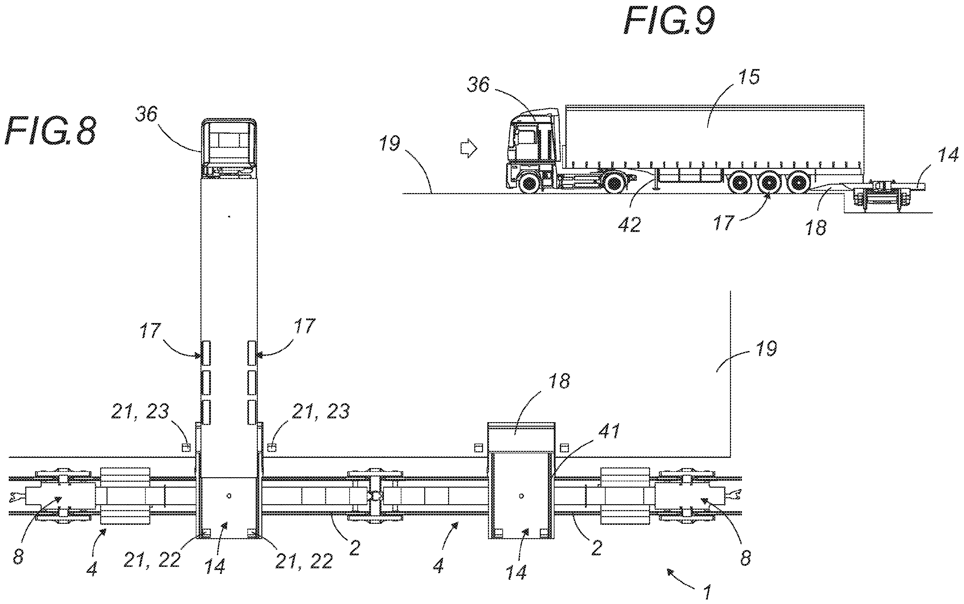

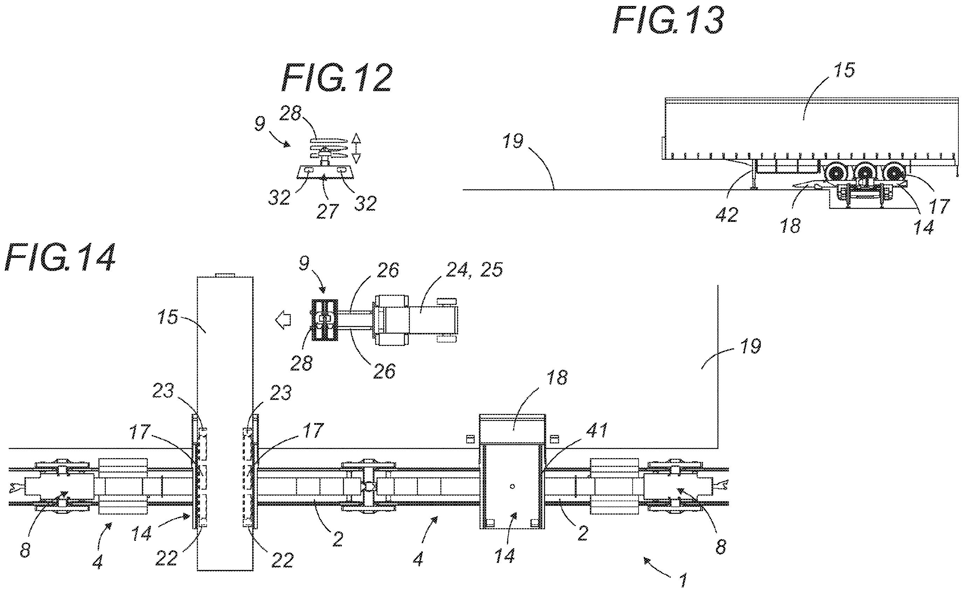

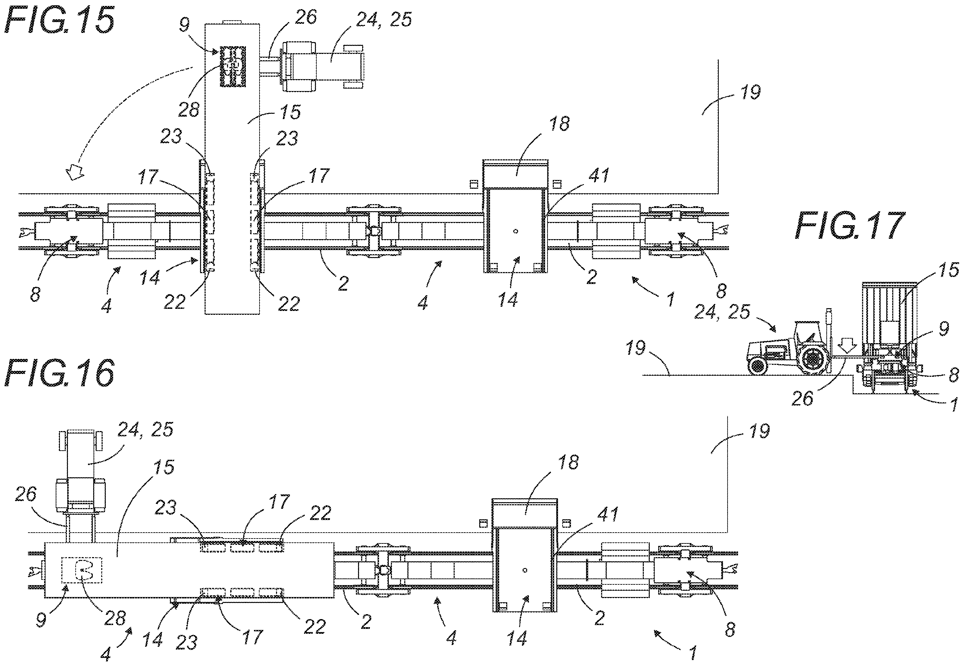

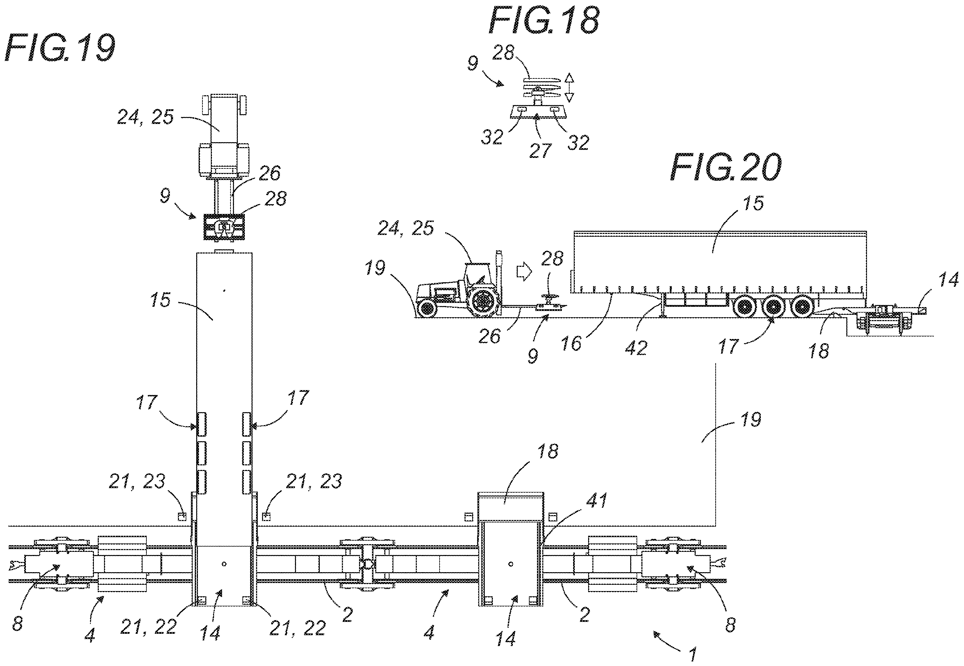

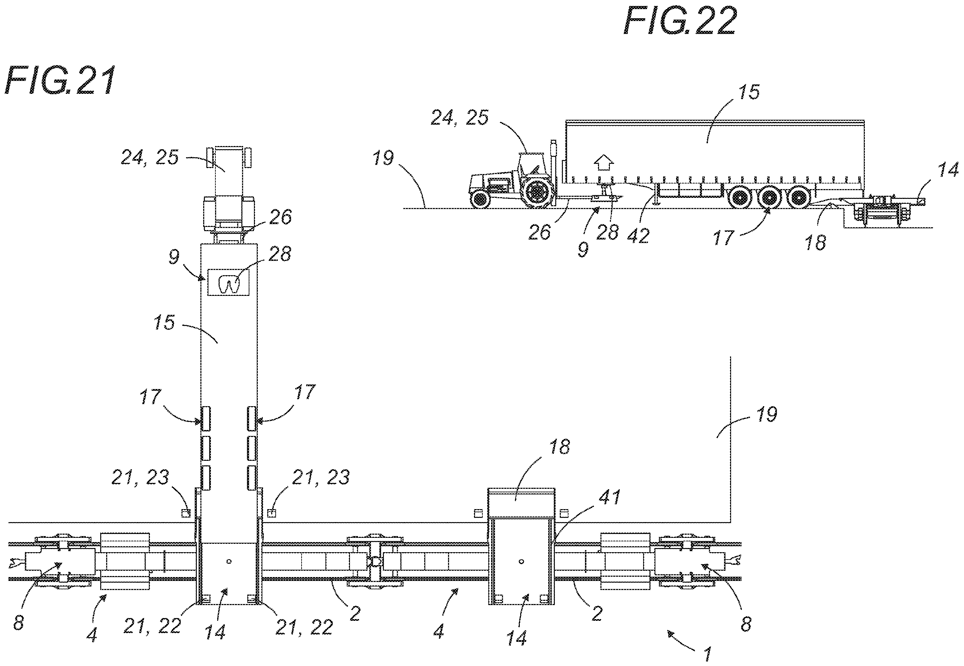

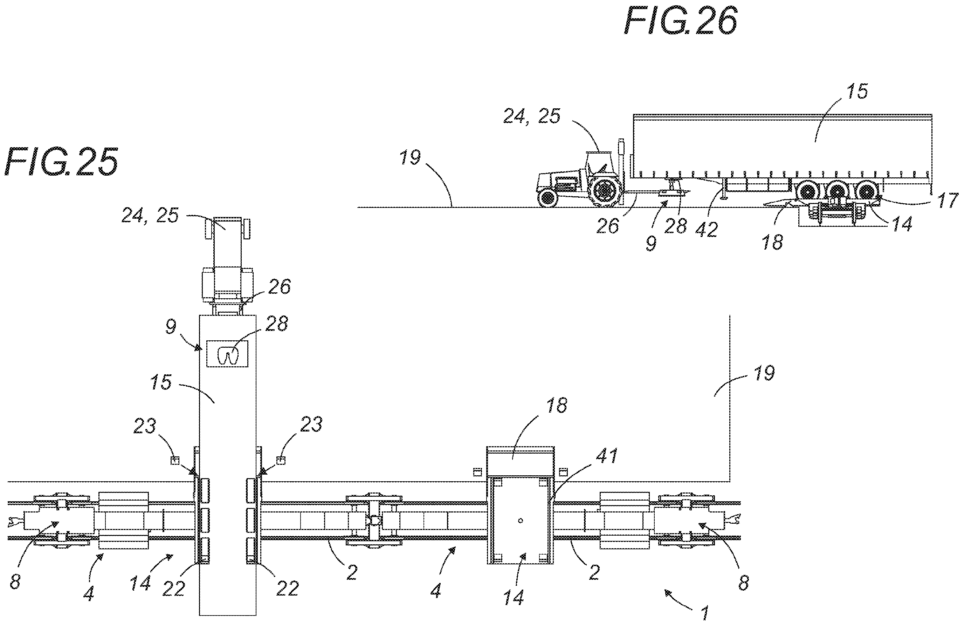

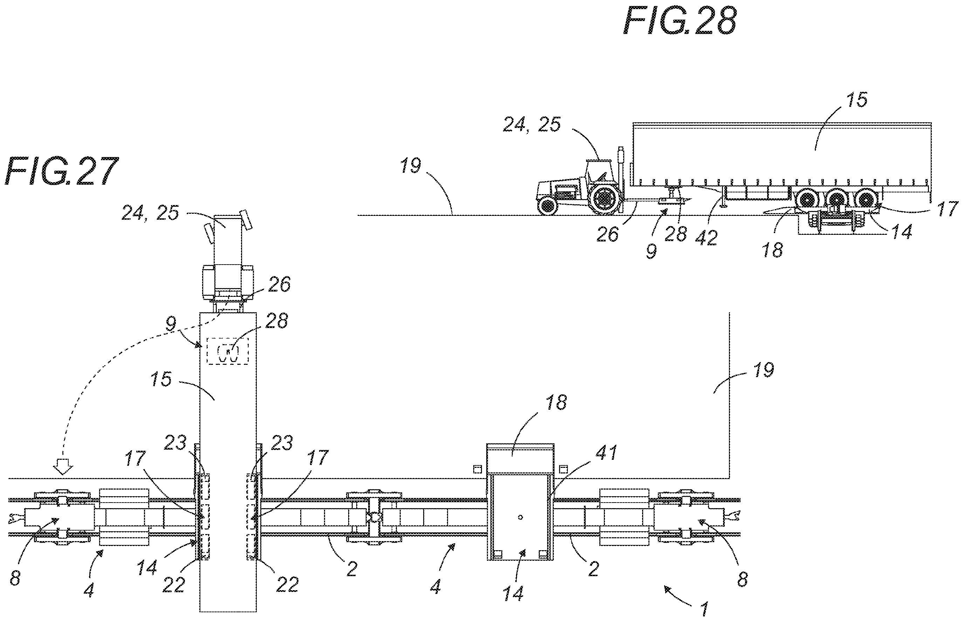

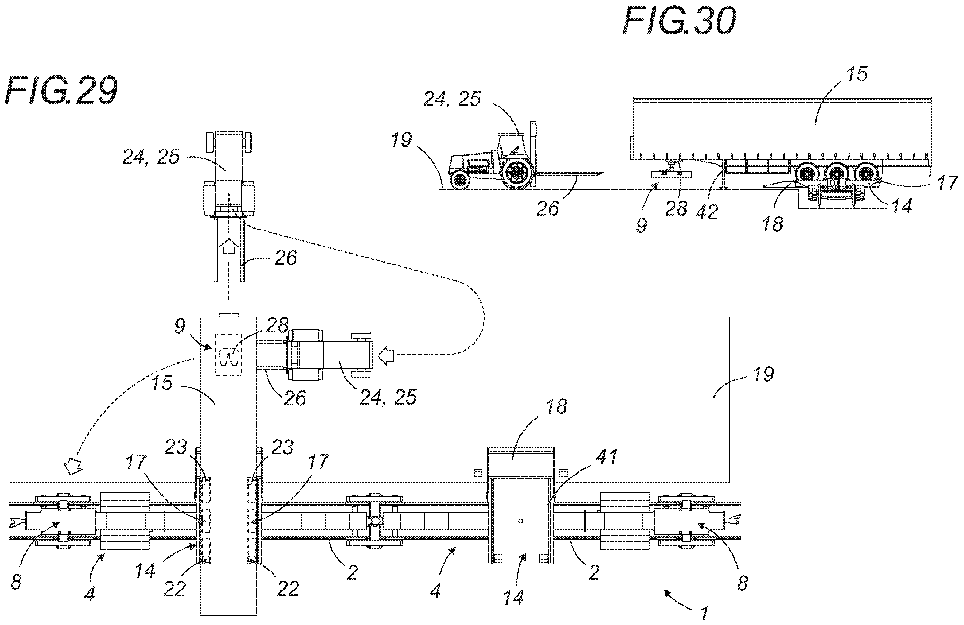

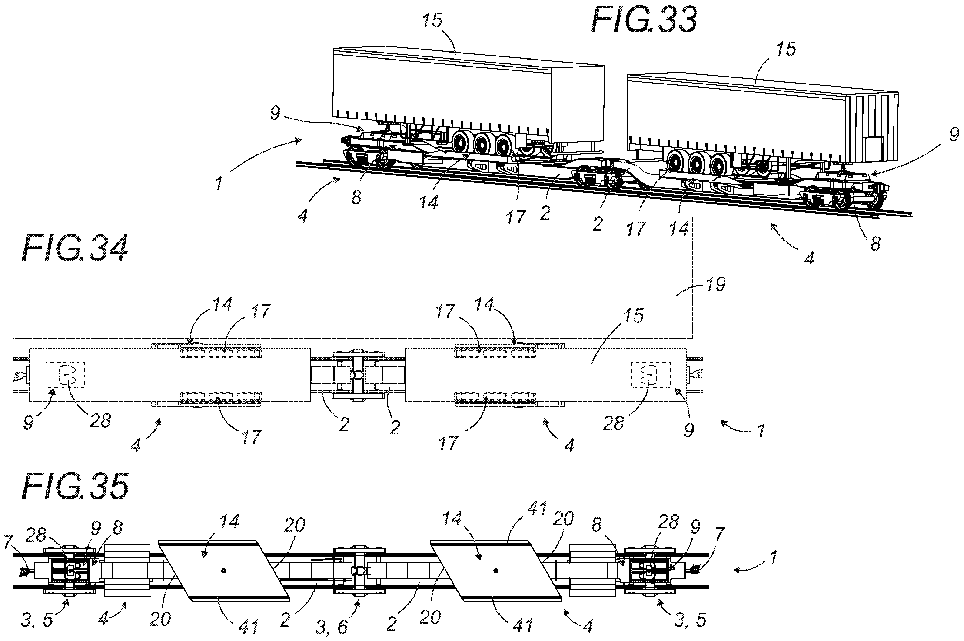

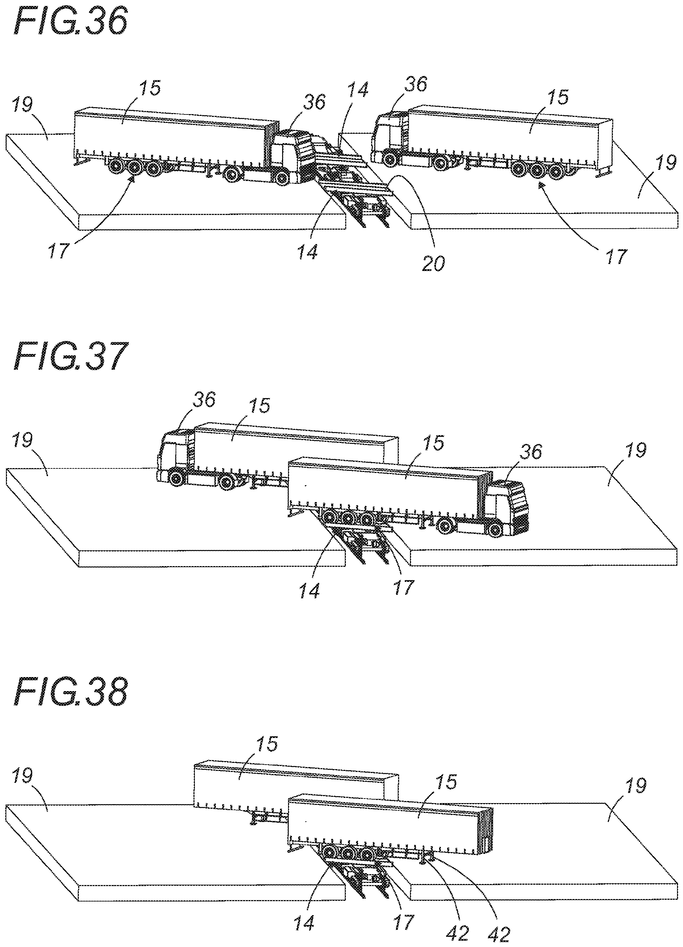

D'autres caractéristiques et avantages de l'invention apparaîtront dans la description qui suit, donnée à titre d'exemple et accompagnée des dessins dans lesquels :
. les figures 1 et 2 sont des vues en plan respectivement de profil et de dessus d'un wagon double à deux plateaux porteurs pivotants en position de transport ;
. les figures 3 et 4 sont des vues en plan respectivement de profil et de dessus d'un wagon double à deux plateaux porteurs pivotants en position de chargement / déchargement ;
. les figures 5 à 7 sont des vues du support de sellette avec :
   . pour la figure 5 une vue isolée en perspective,
   . pour la figure 6 une vue de profil montée sur une plateforme de réception liée au châssis du wagon,
   . pour la figure 7 une vue de dessus montée sur une plateforme de réception liée au châssis du wagon ;
. les figures 8 à 11 sont des vues respectivement et à chaque fois de dessus et de profil illustrant la montée de la semi-remorque sur le plateau porteur lorsqu'elle reste attelée à son tracteur routier ;
. la figure 12 est une vue schématique de profil du support de sellette illustrant la phase de réglage en hauteur de la sellette ;
. la figure 13 est une vue de profil de la semi-remorque chargée sur un plateau porteur avec ses béquilles en appui sur le quai de chargement ;
. les figures 14 à 16 sont des vues de dessus du système illustrant les phases de pose de la sellette, de pivotement du plateau porteur chargé et de montage du support de sellette sur la plateforme de réception correspondante du wagon, le tout au moyen d'un chariot élévateur à fourche ;
. la figure 17 est une vue de profil du quai montrant la pose du support de sellette sur la plateforme de réception correspondante du wagon ;
. la figure 18 est une vue schématique de profil du support de sellette illustrant la phase de réglage en hauteur de la sellette ;
. les figures 19 à 32 sont des couples de vues respectivement de dessus et de profil du système selon l'invention dans les différentes phases de chargement avec un chariot élévateur à fourche, dans le cas où le tracteur routier ne monte pas la semi-remorque sur le plateau porteur, les figures 29 et 30 représentant une variante alternative aux figures 27 et 28 ;
. les figures 33 et 34 sont des vues respectivement en perspective et de dessus montrant le wagon chargé de deux semi-remorques prêt au départ ;
. le figure 35 est une vue de dessus représentant un wagon avec des plateaux porteurs pivotants à bords transversaux obliques ;
. les figures 36 à 38 sont des vues schématiques en perspective illustrant respectivement l'arrivée de deux semi-remorques devant deux plateaux porteurs pivotants en position de chargement en biais, le chargement des semi-remorques sur ces plateaux porteurs au moyen de leur tracteur routier, et l'abandon par leur tracteur routier des semi-remorques sur les plateaux porteurs pivotants.

Le système selon la présente invention va maintenant être décrit de façon détaillée en référence aux figures 1 à 38. Les éléments équivalents représentés sur les différentes figures porteront les mêmes références numériques.

Le système universel de chargement / déchargement et de transport ferroviaire de semi-remorques selon l'invention comprend dans sa version de base des wagons 1 simples, formés d'un châssis 2, préférentiellement plat et surbaissé, châssis supporté à chacune de ses extrémités par un ensemble roulant d'extrémité connu sous le nom de bogie 3.

Le système de transport selon la présente invention peut également utiliser des wagons 1 doubles, tels que ceux représentés sur les figures, formés chacun de l'association de deux wagons élémentaires 4. Ces wagons 1 doubles comportent alors plusieurs types de bogies 3 : deux bogies d'extrémité 5 et un bogie intermédiaire 6 commun assurant un appui roulant médian entre les deux wagons élémentaires 4 disposés tête bêche.

Les wagons doubles présentent l'important intérêt de pouvoir transporter deux charges routières sur un même wagon ferroviaire. Cependant, l'invention s'applique à n'importe quel type de wagon 1 ferroviaire du moment qu'il comporte un châssis 2 susceptible de porter une ou plusieurs semi-remorques et de reprendre tous les efforts générés par leur transport.

Sur le mode de réalisation représenté, chaque wagon élémentaire 4 présente un châssis 2, préférentiellement plat et surbaissé, monté par une de ses extrémités sur le bogie intermédiaire 6 et par son autre extrémité sur le bogie d'extrémité 5 correspondant. Les extrémités du wagon double 1 sont terminées par des tampons ferroviaires et à chaque fois par un crochet d'attelage 7.

Les wagons comportent chacun, de préférence au voisinage des bogies d'extrémité 5, une plateforme de réception 8 fixe par rapport au châssis 2, qui constitue un des moyens principaux du système de chargement et de transport selon l'invention. Cette plateforme de réception 8 est adaptée pour recevoir et porter un support de sellette 9 qui constitue également un autre moyen essentiel de l'invention et qui, comme on le verra par la suite, se monte de manière amovible sur la plateforme de réception 8 lors du chargement d'une semi-remorque, reste en place pendant son transport et est enlevé pour procéder au déchargement de la semi-remorque.

La plateforme de réception 8 comporte pour cela des moyens d'immobilisation 10 qui coopèrent avec des moyens d'immobilisation complémentaires 11 portés par le support de sellette 9.

Les moyens d'immobilisation 10 de la plateforme peuvent être de nature quelconque du moment qu'ils permettent, en combinaison avec les moyens d'immobilisation complémentaires 11 du support de sellette 9, la fixation amovible et la retenue temporaire du support de sellette 9 sur la plateforme de réception 8. Ils peuvent être fixes ou amovibles ou encore articulés.

Il peut s'agir par exemple de plots 12, de chevilles, de saillies, de doigts, de crochets ou autres conformations saillantes coopérant avec des ouvertures 13, anneaux, creux ou cavités quelconques portés par le support de sellette 9.

A l'inverse, les moyens d'immobilisation 10 de la plateforme de réception 8 peuvent être des ouvertures, anneaux, creux ou cavités quelconques coopérant avec des plots, chevilles, saillies, doigts, crochets ou autres conformations saillantes du support de sellette 9.

Ces moyens d'immobilisation 10 et 11 sont de préférence complétés par des moyens de verrouillage temporaire, distincts ou confondus avec les moyens d'immobilisation, tels que par exemple des verrous à broche ou tournants, notamment du type verrous tournants utilisés pour la fixation des conteneurs ISO.

Tout autre moyen approprié d'immobilisation temporaire du support de sellette 9 sur la plateforme de réception 8 du wagon 1 pourra être envisagé.

Sur le châssis 2 de chaque wagon élémentaire 4 est également monté un plateau porteur pivotant 14. Ce plateau porteur pivotant 14 permet avec la plateforme de réception 8 correspondante de recevoir et de supporter une semi-remorque 15 routière dont le système selon l'invention assure le chargement, le transport et le déchargement.

Le système selon l'invention étant universel, il s'adapte à tout type de semi-remorque 15 quels que soient sa nature, son modèle et sa longueur, du moment qu'elle comporte à l'avant un pivot d'attelage 16 et à l'arrière un train de roues 17, par exemple à trois essieux.

Les plateaux porteurs pivotants 14 sont chacun montés en pivotement libre ou motorisés sur le châssis 2 par l'intermédiaire de moyens adaptés mettant en oeuvre par exemple, un axe central de pivotement avec éventuellement l'aide de rouleaux d'appui sur une couronne, de galets, de roulements ou de tout autre moyen équivalent qui relève de la technique ordinaire et qui ne sera par conséquent pas décrit ici.

Les plateaux porteurs pivotants 14 peuvent s'orienter par pivotement de préférence manuel ou éventuellement motorisé entre deux positions caractéristiques : une position de transport (figure 2) dans laquelle ils se trouvent alignés selon l'axe longitudinal du wagon et une position de chargement ou de déchargement (figure 4) dans laquelle ils se trouvent perpendiculaires à l'axe longitudinal du wagon ou en biais par rapport à celui-ci.

Les plateaux porteurs pivotants 14 sont de préférence immobilisés dans ces deux positions caractéristiques par tout moyen de verrouillage adapté, par exemple mécanique, pneumatique ou hydraulique et préférentiellement manuel.

Les plateaux porteurs pivotants 14 présentent préférentiellement une longueur bien inférieure à celle du châssis 2 sur lequel ils sont montés, cette longueur étant de préférence légèrement supérieure à celle du train de roues 17 des semi-remorques 15.

En position de transport, les plateaux porteurs pivotants 14 ne supportent pas l'ensemble de la semi-remorque 15 correspondante, mais uniquement sa partie arrière par l'intermédiaire de son train de roues 17, la partie avant de la semi-remorque 15 étant supportée par la plateforme de réception 8 par l'intermédiaire de son pivot d'attelage 16 qui se trouve immobilisé dans le support de sellette 9.

Une des caractéristiques du système selon l'invention est que la plateforme de réception 8 est liée au châssis et est indépendante du plateau porteur pivotant 14. Ainsi, la semi-remorque 15 est, par l'intermédiaire de son pivot d'attelage 16, directement verrouillée au châssis 2 du wagon 1. En outre, le pivotement du plateau porteur pivotant 14 se trouve également verrouillé par cet agencement.

Le plateau porteur pivotant 14 peut comporter à l'une de ses extrémités une rampe d'accès telle que 18 réalisée par exemple sous la forme d'une plaque rabattable d'extrémité, montée en rappel élastique en position haute comme représenté sur les figures. Cette rampe d'accès 18 assure la transition continue entre le plan de roulage formé par le quai de chargement 19 et celui du plateau porteur 14 recevant les roues de la semi-remorque 15.

Dans le cas où deux quais de chargement / déchargement 19 sont présents de part et d'autre de la voie ferrée sur laquelle se trouve le wagon 1 de transport des semi-remorques 15, on peut vouloir faire traverser le plateau porteur pivotant 14 au tracteur routier de la semi-remorque 15 et le faire passer d'un quai à l'autre de manière à pouvoir charger en marche avant la semi-remorque 15 sur le plateau porteur pivotant 14.

Dans ce cas, le plateau porteur pivotant 14 sera préférentiellement équipé de deux rampes d'accès 18, une à chacune de ses extrémités pour former une transition continue avec chacun des quais de chargement 19 bordant la voie ferrée.

En variante, cette rampe rabattable d'accès 18 peut être remplacée par une prolongation d'extrémité, par exemple articulée ou télescopique, ou simplement par l'extrémité du plateau porteur pivotant 14. Cette prolongation peut être basculante pour présenter une position relevée ou rabattue de repos.

Cette prolongation est destinée à obtenir un même niveau entre le plan de roulage du quai de chargement 19 et le plan porteur du plateau porteur pivotant 14 correspondant, le bord transversal 20 de l'extrémité du plateau porteur 14 ou de sa prolongation devant se trouver, en position de chargement / déchargement du plateau, suffisamment proche du bord du quai pour que l'intervalle existant entre les deux soit aisément franchissable par la semi-remorque 15.

Pour faciliter le pivotement du plateau porteur pivotant 14 lorsque cette extrémité ou prolongation d'extrémité est fixe, on peut par exemple prévoir un évidemment local incurvé concave dans la structure du quai de chargement 19 en vis-à-vis de cette extrémité et une extrémité de plateau porteur 14 incurvée convexe de manière à permettre le dégagement des coins lors du pivotement du plateau porteur pivotant 14 pour passer de l'une à l'autre de ses positions caractéristiques.

On peut également utiliser des plateaux porteurs pivotants 14 à bords transversaux 20 obliques, comme dans la variante représentée sur les figures 35 à 38. Bien évidemment, ce mode de réalisation est préférentiel par rapport au précédent car il n'implique pas de modification de la structure des quais de chargement 19.

Les plateaux porteurs pivotants 14 comportent de préférence un jeu de quatre cales 21, dont deux cales arrière 22 et deux cales avant 23, qui servent à immobiliser les roues d'extrémité du train de roues 17 de la semi-remorque 15 lorsqu'elle se trouve chargée sur le plateau porteur pivotant 14.

Dans le cas où le plateau porteur pivotant 14 n'est accessible que par un seul de ses bords transversaux 20, ce qui impose un chargement en marche arrière de la semi-remorque 15, les cales arrière 22 peuvent être fixes par rapport au plateau porteur 14. Elles peuvent être assemblées de manière fixe sur le plateau porteur 14 ou être directement intégrées à celui-ci. En revanche, les cales avant 23 doivent être prévues mobiles ou amovibles afin de libérer le passage sur le plateau porteur tournant 14 pendant les phases de chargement et de déchargement de la semi-remorque 15 comme on le verra par la suite.

Dans le cas où le plateau porteur pivotant 14 est indifféremment accessible par chacun de ses bords transversaux 20, rendant ainsi possible la traversée du plateau et le chargement en marche avant de la semi-remorque 15, toutes les cales 21, c'est-à-dire arrière 22 et avant 23, sont prévues mobiles ou amovibles pour pouvoir laisser le plateau porteur tournant 14 complètement libre pour les phases de chargement et de déchargement de la semi-remorque 15.

Bien entendu, tout autre moyen approprié de blocage du train de roues 17 de la semi-remorque 15 pourra être envisagé.

On peut aussi imaginer une solution sans cale, dans ce cas la semi-remorque 15 est verrouillée uniquement par son pivot d'attelage 16. Les plateaux porteurs 14 présentent alors de préférence des rebords latéraux permettant de bien centrer la semi-remorque 15. Ces rebords servent également à retenir la semi-remorque 15 en cas d'effort latéraux s'exerçant pendant le transport ferroviaire.

Dans une autre version plus élaborée, le verrouillage du train de roues 17 de la semi-remorque 15 peut se faire automatiquement par exemple lorsque le plateau porteur pivotant 14 est bloqué en position de transport.

Un des moyens importants du système de transport ferroviaire de semi-remorques selon la présente invention concerne le support de sellette 9. Il est représenté plus en détail sur les figures 5 à 7.

Il s'agit d'un support d'appui permettant de supporter l'avant de la semi-remorque 15 pendant les phases de chargement et de déchargement avec l'aide d'un engin notamment roulant de manutention 24, par exemple du genre chariot élévateur 25 à fourche(s) 26 de préhension, mais aussi pendant le transport ferroviaire lorsqu'il se trouve placé sur la plateforme de réception 8 liée au châssis 2 du wagon 1.

Ce support de sellette 9 constitue ainsi l'interface d'une part entre la semi-remorque 15 et l'engin de manutention 24 pendant les phases de chargement et de déchargement, et d'autre part entre la semi-remorque 15 et le wagon 1 pendant le transport ferroviaire.

Il se compose de façon générale d'un corps 27, qui se monte de façon amovible sur la plateforme de réception 8 du wagon 1, et de préférence d'une sellette 28 adaptée pour recevoir et immobiliser le pivot d'attelage 16 de la semi-remorque 15, tout autre système de verrouillage du pivot d'attelage 16 de la semi-remorque 15 étant aussi possible.

Le corps 27 se présente sous la forme d'une base mécanique par exemple formée d'une structure en cadre ou de plaques longitudinales 29 et transversales 30 extérieures et intérieures.

Le corps 27 est avantageusement préhensible par un engin de manutention 24. Il comporte pour cela des moyens mécaniques d'interface 31 compatibles avec les moyens de préhension de cet engin. Sur la variante représentée, il s'agit par exemple d'une série d'ouvertures 32 ménagées de façon alignée dans les plaques longitudinales 29 et/ou transversales 30 du corps 27, de manière à laisser des volumes intérieurs libres permettant le passage de la ou des fourche(s) 26 du chariot élévateur 25.

Selon les variantes et la disposition de ces ouvertures 32, ces passages peuvent être transversaux ou longitudinaux ou les deux à la fois comme on peut le voir sur l'exemple de la figure 5. Dans ce dernier cas, le chariot élévateur 25 peut avantageusement prendre le support de sellette 9 à partir de n'importe laquelle de ses faces et le mettre en oeuvre selon les souhaits en présentation transversale ou longitudinale.

Cependant, d'autres engins de manutention 24 peuvent être utilisés, tels qu'une grue portuaire ou un autre engin de levage de type grue ou palonnier par exemple. Les moyens mécaniques d'interface 31 peuvent être différents en fonction du type d'engin de manutention utilisé. Dans le cas par exemple d'une grue, les ouvertures 32 servant de passages pour les bras de la fourche 26 du chariot élévateur 25 peuvent par exemple être remplacées par des anneaux de reprise pour les élingues. Différents moyens mécaniques d'interface 31 peuvent avantageusement coexister sur le corps 27 du support de sellette 9 afin de le rendre compatible avec plusieurs types d'engin de manutention.

Comme déjà indiqué précédemment, le corps 27 du support de sellette 9 comporte également des moyens d'immobilisation 11 complémentaires à ceux 10 portés par la plateforme de réception 8 du wagon.

Sur la variante représentée, ces moyens d'immobilisation complémentaires 11 sont réalisés à l'aide de profilés ajourés 33, bordant les bords longitudinaux ou plaques longitudinales 29 du corps 27, et présentant chacun une série d'ouvertures 13 par exemple de forme carrée venant s'encastrer ou se faire traverser par les chevilles ou les plots 12 par exemple au nombre de quatre dont est pourvue la plateforme de réception 8 liée au châssis 2 du wagon 1.

La multiplicité des ouvertures 13 présentes sur les profilés ajourés 33 permet de compenser les différences de distance pouvant exister selon les modèles de semi-remorque entre le pivot d'attelage 16 et le train de roues 17 de la semi-remorque 15. Quelle que soit cette distance, et donc quel que soit le positionnement du support de sellette 9 monté sur le pivot d'attelage 16 de la semi-remorque 15, il existe des ouvertures 13 qui se retrouvent sensiblement en face et peuvent être traversées par les plots 12 de la plateforme de réception 8 lorsque le plateau porteur pivotant 14 est en position de transport. Le montage du support de sellette 9 sur la plateforme de réception 8 du wagon reste donc toujours possible.

De tels profilés ajourés 33 pourraient également être prévus le long des bords transversaux ou plaques transversales 30 du corps 27 de manière à rendre possible, dans une configuration symétrique du corps 27, un montage du support de sellette 9 sur la plateforme de réception 8 du wagon quel que soit le sens de présentation du support de sellette 9 par l'engin de manutention 24.

Sur le corps 27 du support de sellette 9 et de préférence sensiblement en son centre, est monté pivotant un fût 34 prolongé télescopiquement par un tronçon d'extrémité 35 sur l'extrémité libre duquel est montée à pivotement la sellette 28. Le pivotement de la sellette 28 est limité à celui autour d'un axe horizontal, c'est-à-dire parallèle au plan de base du corps 27 du support de sellette et perpendiculaire au sens de la marche. Ainsi, la sellette est libre en tangage, mais bloquée en roulis. De cette manière, la semi remorque 15 est maintenue en roulis lorsqu'elle se trouve sur le wagon 1.

La forme technique de la sellette 28 est prévue pour être compatible avec celle du pivot d'attelage 16 des semi-remorques 15 à charger et il s'agit de façon générale d'une sellette 28 normalisée. Cette sellette 28 est l'équivalent de celle existant sur les tracteurs routiers 36 auxquels sont accouplées les semi-remorques 15 à transporter.

Elle comporte une entrée convergente 37, un logement 38 pour le pivot d'attelage 16 et un dispositif de verrouillage de celui-ci libérable par une poignée d'actionnement 39.

Le verrouillage du pivot d'attelage 16 dans la sellette 28 se fait classiquement par engagement longitudinal de la sellette 28 autour du pivot d'attelage 16 jusqu'à ce que ce dernier se retrouve dans le logement 38, cet engagement étant facilité par la forme convergente de l'entrée 37. Le verrouillage du pivot d'attelage 16 est alors automatique. Lorsque le pivot d'attelage 16 est verrouillé dans la sellette 28, tous ses déplacements par rapport à la sellette 28 suivant les trois directions sont bloqués. L'orientation, vue de dessus, de la sellette 28 n'a donc pas d'importance.

La sellette 28 est montée de préférence réglable en hauteur par rapport au corps 27 du support de sellette 9. Pour cela, le tronçon d'extrémité 35 est monté à coulissement télescopique dans le fût 34 afin de permettre le réglage en hauteur de la sellette 28 par rapport au corps 27. L'immobilisation dans une position donnée s'effectue par tout moyen approprié, serrage, ou brochage tel que représenté ou tout autre.

Ce mécanisme de réglage de hauteur peut être prévu actionnable par un opérateur, ou par une modification de la hauteur de la fourche 26 du chariot élévateur 25 ou par tout autre moyen équivalent de l'engin de manutention 24 utilisé.

D'autres systèmes de réglage en hauteur sont aussi possibles, au niveau de la plateforme de réception 8 par exemple.

Dans une version de base, où le gabarit le permet où si, par exemple, la hauteur des pivots d'attelage 16 des semi-remorques 15 est constante, cette fonction de réglage en hauteur peut être supprimée

Ce mécanisme est verrouillé automatiquement pour reprendre tous les efforts verticaux provenant de la semi-remorque 15. Le pivot d'attelage 16 repris par la sellette 28 est ainsi bloqué dans toutes les directions.

Afin d'assurer une fonction d'amortissement par rapport aux chocs longitudinaux susceptibles de se produire pendant le transport ferroviaire, mais aussi de procurer le débattement nécessaire pour absorber les ajustements dus à la pose de la semi-remorque 15 sur le wagon 1, le fût 34 est de préférence maintenu mécaniquement sur le corps 27 par une liaison oblique d'arc-boutement 40, par exemple formée d'un vérin, d'un ressort ou de tout moyen analogue, avec rappel élastique mécanique ou autre vers le centre, c'est-à-dire en position droite et verticale du fût 34 supportant la sellette 28.

Une version de base sans possibilité de débattement longitudinal de la sellette 28 reste également possible, surtout dans le cas où le train de roues 17 de la semi-remorque 15 ne serait pas en appui contre des cales 21.

Bien entendu, d'autres formes de support de sellette 9 sont possibles. L'intérêt est qu'ils soient préhensibles par un engin de manutention 24 notamment à fourche 26. Celui pris comme exemple dans la suite de ce descriptif est un engin roulant du type chariot élévateur 25 comportant, monté sur une de ses extrémités, un dispositif de préhension à fourche 26 connu pour la manutention et la manipulation des palettes et des conteneurs.

On peut envisager selon le même principe inventif d'utiliser des plateaux porteurs pivotants 14 à bords transversaux 20 obliques, de manière à pouvoir charger et décharger les semi-remorques 15 de part et d'autre de deux quais de chargement et de déchargement 19 en vis-à-vis séparés par la voie ferrée sur laquelle se trouve le wagon 1 de transport des semi-remorques, ceci en utilisant préférentiellement le tracteur routier 36 de la semi-remorque 15 à charger.

Cette possibilité est illustrée par les figures 35 à 38.

Ces bords transversaux 20 en oblique permettent de faire pivoter le plateau porteur 14 dans le sens de dégagement du coin le plus éloigné de la bordure adjacente du quai 19 sans que celui-ci n'interfère avec cette bordure. On peut ainsi obtenir un plateau porteur pivotant 14 à niveau avec le plan de sol du quai 19 sans modifier sa bordure. Cette conformation facilite le chargement en oblique avec passage sur le plateau porteur pivotant 14 du tracteur routier 36 de la semi-remorque 15 au-dessus de la voie ferrée d'un quai 19 à l'autre comme visible sur les figures 36 et 37.

Dans tous les cas, lorsque la semi-remorque est chargée sur le wagon 1 en position de transport ferroviaire, elle repose sur son train de roues 17, préférentiellement guidé latéralement par des bordures latérales 41 du plateau porteur pivotant 14, et en appui par son pivot d'attelage 16 sur la sellette 28. Les déplacements verticaux, longitudinaux et latéraux du pivot d'attelage 16 sont bloqués par la sellette 28, elle-même immobilisée sur le châssis 2 par l'intermédiaire de la plateforme de réception 8 par exemple au moyen des plots 12. Un verrouillage supplémentaire peut exister, si la semi-remorque 15 est calée au niveau de son train de roues 17 par des cales 21.

On décrira maintenant la mise en place d'une semi-remorque 15 sur un wagon 1 double à l'aide des figures annexées 8 à 34 dans le cadre du système de transport selon l'invention.

Cette mise en place de chargement peut s'effectuer soit en utilisant le tracteur routier 36 de la semi-remorque 15 pour la placer sur le plateau porteur pivotant 14 à partir d'un quai de chargement 19, soit par utilisation de suite du chariot élévateur 25 et du support de sellette 9 à partir du même quai de chargement 19.

On envisagera ces deux possibilités dans le descriptif ci-après.

On examinera tout d'abord le chargement dont la phase initiale est réalisée à l'aide du tracteur routier 36 de la semi-remorque 15. Cette méthode, représentée sur les figures 8 à 17, est la préférée. Mais elle nécessite la présence du wagon 1. Dans le cas où l'on souhaite préparer le chargement du wagon 1, on choisira plutôt la deuxième solution représentée sur les figures 18 à 32.

La semi-remorque 15 est amenée à l'aide de son tracteur routier 36 sur le quai de chargement 19 en position de marche arrière en face du plateau porteur pivotant 14 qui a été pivoté pour se trouver en position de chargement, perpendiculaire à l'axe longitudinal du wagon et à la bordure du quai (figures 8 et 9) ou orienté en biais selon un angle d'ouverture choisi par l'exploitant, par exemple pour optimiser l'emprise au sol. La rampe d'accès 18 assure de préférence la liaison entre le quai de chargement 19 et le plateau porteur pivotant 14 correspondant. Dans cette position, le plateau porteur pivotant 14 est verrouillé par rapport au châssis 2 du wagon 1.

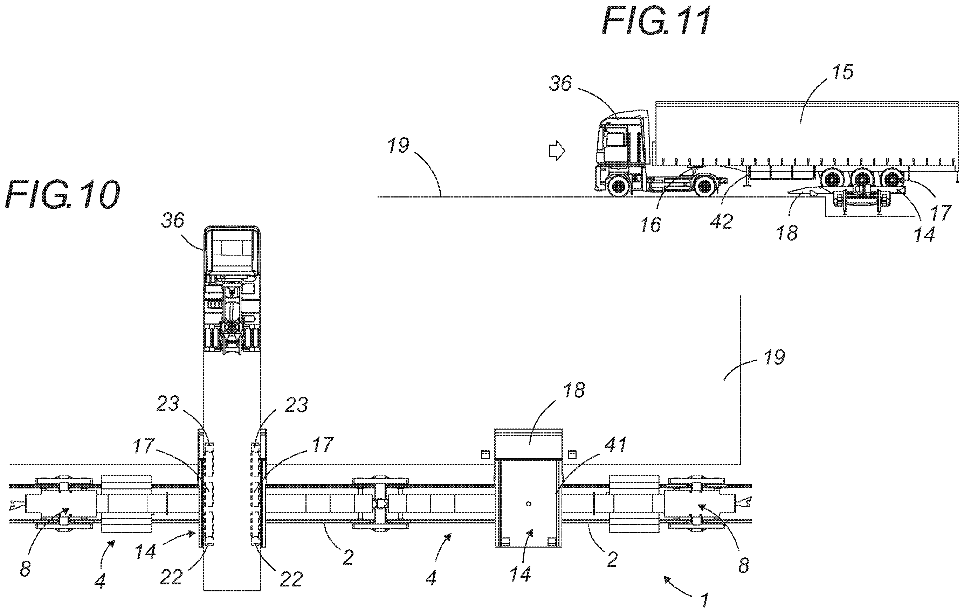

Le tracteur routier 36 pousse la semi-remorque 15 en marche arrière jusqu'à sa position définitive sur le plateau porteur pivotant 14. Dans cette position, le train de roues 17 de la semi-remorque 15 occupe sensiblement toute la longueur du plateau porteur pivotant 14 et les roues arrière de ce train sont bloquées par les cales arrière 22 fixes. On pose ensuite les cales avant 23 amovibles pour bloquer les roues avant du train de roues 17 (figures 10 et 11).

Le tracteur routier 36 abandonne alors la semi-remorque 15 dans cette position après avoir sorti les béquilles 42 (figure 13) et dégonflé la suspension pneumatique de la semi-remorque 15. Les raccordements électriques et pneumatiques entre tracteur routier 36 et la semi-remorque 15 sont également débranchés. Ainsi la semi-remorque 15 se trouve automatiquement freinée.

Dans l'hypothèse d'un plateau porteur pivotant 14 traversant par rapport aux deux bordures opposées de deux quais 19 en regard, on peut envisager d'utiliser en marche avant le tracteur routier 36 de la semi-remorque pour positionner celle-ci sur le plateau porteur pivotant 14.

Dans les cas ci-dessus, on bénéficie de l'avantage de rester relié en pneumatique et en électrique entre le tracteur routier 36 et la semi-remorque 15, jusqu'à la mise en place de la semi-remorque 15 sur le plateau porteur pivotant 14. Dans le cas du chargement par chariot élévateur 25 (deuxième méthode de chargement décrite par la suite), il faut rebrancher les tuyaux au chariot élévateur 25 afin de débloquer les freins de la semi-remorque pour pouvoir la déplacer. L'un des avantages de cette première méthode est que l'on ne doit faire ces opérations qu'une seule fois.

Intervient ensuite le chariot élévateur 25 à fourche 26 et le support de sellette 9. Après avoir réglé si besoin, la hauteur de la sellette 28 (figure 12) par rapport au plan de pose de la semi-remorque 15 sur le wagon 1 pour que la semi-remorque 15 se trouve bien horizontale en position de transport ferroviaire, le chariot élévateur 25 vient monter la sellette 28 sur le pivot d'attelage 16 de la semi-remorque 15 (figure 14). Un réglage de la hauteur de la sellette 28 au moyen de la ou des fourche(s) 26 du chariot élévateur 25, après la pose du support de sellette 9 sur le pivot d'attelage 16, est également possible.

Le chariot élévateur 25 pousse alors le support de sellette 9 en pivotement de 90° d'angle pour faire pivoter le plateau porteur pivotant 14 et l'amener en position de transport alignée dans l'axe longitudinal du wagon 1 (figures 15 et 16).

Pour ce faire, l'avant de la semi-remorque 15 est légèrement soulevé, pour libérer les béquilles 42 puis rabaissé lorsque le support de sellette 9 arrive au-dessus de la plateforme de réception 8 correspondante (figure 17).

Le chargement avec le chariot élévateur 25 seul, correspondant à la deuxième méthode de chargement, est illustré par les figures 18 à 32.

Comme précédemment la sellette 28 est si besoin, réglée en hauteur par rapport au corps 27 du support de sellette 9 pour assurer l'horizontalité de la semi-remorque 15 en position de transport ferroviaire, ce réglage pouvant se faire avant ou après le verrouillage de la sellette 28 sur le pivot d'attelage 16.

Le chariot élévateur 25 vient prendre le support de sellette 9 à l'aide de sa fourche 26 et s'approche de la semi-remorque 15 pour présenter puis encliqueter la sellette 28 sur son pivot d'attelage 16 (figures 19 à 22).

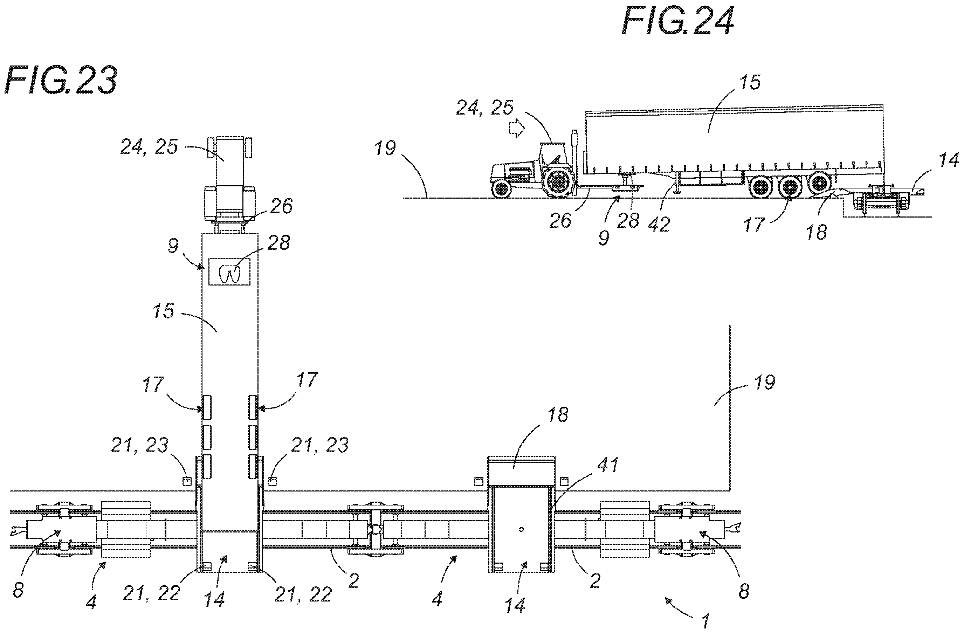

Après avoir raccordé pneumatiquement et si besoin, électriquement le chariot élévateur 25 à la semi-remorque 15 pour débloquer ses freins, le chariot élévateur 25 soulève l'avant de la semi-remorque 15 de façon à rentrer les béquilles 42 et la pousse en marche arrière sur le plateau porteur pivotant 14 (figures 23 à 26) jusqu'à contact avec les cales arrière 22 fixes. On procède ensuite à la pose des cales avant 23 amovibles, puis le chariot élévateur 25 effectue une manoeuvre de marche arrière pour amener par pivotement la semi-remorque 15 et le plateau porteur pivotant 14 dans l'axe longitudinal du wagon 1 (figures 27 et 28). Cette manoeuvre suppose un trajet conformément au trait en pointillés et à la flèche représentés sur la figure 27.

Une variante de manoeuvre est représentée sur les figures 29 et 30. Celle-ci suppose un désengagement des fourches 26 du chariot élévateur 25 et un nouvel engagement de celles-ci selon une position différente décalée de 90° d'angle sur le corps 27 du support de sellette 9 (figure 29 et 30). Après la pose de la sellette 28 et la mise en place de la semi-remorque 15 sur le plateau porteur pivotant 14 par une manoeuvre en marche arrière du chariot élévateur 25 comme précédemment, le chariot élévateur 25 est amené dans une position de poussée dans laquelle il se trouve perpendiculaire à l'avant de la semi-remorque 15. A partir de cette position, le chariot élévateur 25 fait pivoter la semi-remorque 15 de 90° d'angle jusqu'à son alignement avec l'axe longitudinal du wagon 1 selon un tracé matérialisé sur la figure 29 par deux lignes en pointillés.

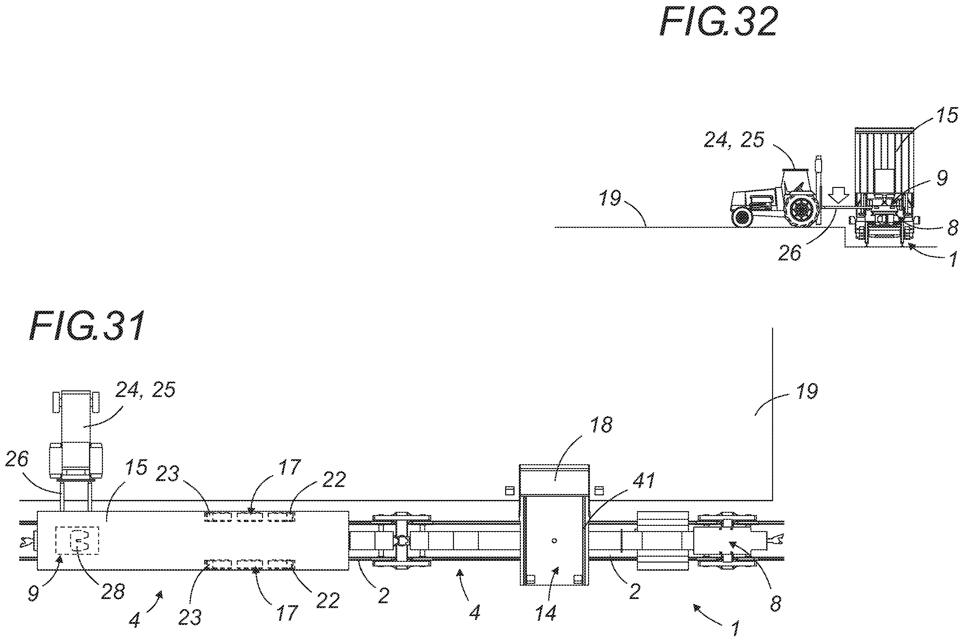

On abaisse alors en le centrant, le support de sellette 9 sur la plateforme de réception 8 pour que les chevilles ou les plots 12 d'immobilisation viennent traverser les ouvertures 13 du corps 27. La hauteur de la sellette 28 a été si besoin, réglée préalablement pour qu'en position immobilisée de transport, la semi-remorque 15 se trouve bien à l'horizontale (figure 31 et 32).

Les phases de déchargement découlent des phases de chargement décrites ci-dessus en procédant de façon inverse.

Les figures 33 et 34 montrent deux semi-remorques 15 en position de transport ferroviaire sur un wagon double.

On remarque les positions parfaitement horizontales et l'universalité du système de chargement et de transport qui peut s'adapter à de nombreux types de semi-remorques

Lors du chargement des semi-remorques 15 dans le cadre de la variante représentée sur les figures 35 à 38, le tracteur routier 36 de chaque semi-remorque 15 la met en place sur le plateau porteur pivotant 14 correspondant qui se trouve en position de chargement par exemple en biais par rapport à l'axe longitudinal du wagon 1. Pour ce faire, le tracteur routier 36 attelé à la semi-remorque 15 traverse la voie ferrée entre les deux quais 19 voisins en vis-à-vis en utilisant le plateau porteur pivotant 14 correspondant comme passerelle de franchissement.

Les phases d'immobilisation du train de roues 17 de la semi-remorque 15 par les cales 21, de pose de la sellette 28 à l'aide du support de sellette 9 et de pivotement du plateau porteur pivotant 14 restent inchangées par rapport aux manoeuvres de la version de base. Bien entendu, les plateaux porteurs pivotants 14 peuvent être motorisés. Dans ce cas, le chariot élévateur 25 ne fait qu'accompagner le mouvement.

Dans une version élaborée, le verrouillage des roues peut se faire automatiquement, par exemple quand on rabat par pivotement le plateau porteur 14 sur le wagon 1.

Il n'a été décrit ci-dessus qu'un wagon 1 double, il est bien entendu qu'un wagon 1 simple entre dans le cadre de l'invention et que le système de transport pour être rentable, doit préférentiellement comporter une pluralité de wagons qui constituent ensemble un train ferroviaire.

De manière évidente, l'invention ne se limite pas aux modes de réalisation préférentiels décrits précédemment et représentés sur les différentes figures. Bien d'autres variantes sont possibles tout en restant dans le même principe inventif défini par les revendications.

## Revendications

1. Système de chargement / déchargement et de transport ferroviaire de semi-remorques routières, système comprenant au moins un wagon (1) ferroviaire et un support (9) pour le pivot d'attelage (16) d'une semi-remorque (15), ce wagon comportant un châssis (2) et étant destiné à recevoir pour son transport ferroviaire au moins la semi-remorque (15) routière équipée à l'avant du pivot d'attelage (16) et à l'arrière d'un train de roues (17), le wagon (1) de ce système comprenant :
- au moins un plateau porteur pivotant (14) par rapport au châssis (2), qui est adapté pour recevoir le train de roues (17) de la semi-remorque (15), ce plateau porteur (14) étant pivotant entre une position de transport dans laquelle il est orienté longitudinalement par rapport au wagon (1) et une position de chargement / déchargement dans laquelle il est orienté transversalement ou en biais par rapport au wagon (1) ; et
- au moins une plateforme de réception (8) destinée à recevoir le support (9) pour le pivot d'attelage (16) de la semi-remorque (15) et comportant des moyens d'immobilisation (10) de ce support (9),
**caractérisé en ce que** :
- la plateforme de réception (8) est liée ou intégrée au châssis (2), et fixe par rapport à celui-ci et indépendante du plateau porteur pivotant (14),
- le support (9) reçu par la plateforme de réception (8) pour le pivot d'attelage (16) de la semi-remorque (15) portée par le wagon (1) est un support amovible (9),
et **en ce que** le support amovible (9) comporte :
- un corps (27), préhensible par un engin de manutention (24) et comportant pour cela des moyens mécaniques d'interface (31) compatibles avec les moyens de préhension de cet engin de manutention (24), corps (27) qui se monte de façon amovible sur la plateforme de réception (8) du wagon (1) et qui comporte des moyens d'immobilisation complémentaires (11) coopérant avec les moyens d'immobilisation (10) de la plateforme de réception (8) pour assurer la fixation amovible et la retenue temporaire du support amovible (9) sur la plateforme de réception (8); et
- un dispositif (28) adapté pour recevoir, supporter et immobiliser le pivot d'attelage (16) de la semi-remorque (15).

2. Système selon l'une quelconque des revendications précédentes **caractérisé en ce que** le wagon (1) comporte deux plateaux porteurs pivotants (14) et deux plateformes de réception (8) lui permettant de transporter simultanément deux semi-remorques (15).

3. Système selon l'une quelconque des revendications précédentes **caractérisé en ce qu'**il comporte un moyen de verrouillage servant à immobiliser le plateau porteur pivotant (14) en position de transport et en position de chargement / déchargement.

4. Système selon l'une quelconque des revendications précédentes **caractérisé en ce que** le plateau porteur pivotant (14) présente une longueur légèrement supérieure à celle du train de roues (17) de la semi-remorque (15).

5. Système selon l'une quelconque des revendications précédentes **caractérisé en ce que** le plateau porteur pivotant (14) comporte, à l'une au moins de ses extrémités, une rampe d'accès (18) ou une prolongation d'extrémité, rabattable, basculante, articulée ou télescopique.

6. Système selon l'une quelconque des revendications précédentes **caractérisé en ce que** le plateau porteur pivotant (14) comporte des bords transversaux (20) obliques ou incurvés convexes.

7. Système selon l'une quelconque des revendications précédentes **caractérisé en ce que** le plateau porteur pivotant (14) comporte des rebords latéraux (41), ou des cales (21) fixes, mobiles ou amovibles servant à immobiliser le train de roues (17) de la semi-remorque (15) lorsqu'elle se trouve chargée sur le plateau porteur pivotant (14).

8. Système selon l'une quelconque des revendications précédentes **caractérisé en ce qu'**il comporte des moyens de verrouillage temporaire, distincts ou confondus avec les moyens d'immobilisation (10) ou moyens d'immobilisation complémentaires (11), qui complètent ces moyens d'immobilisation (10) ou moyens d'immobilisation complémentaires (11).

9. Système selon l'une quelconque des revendications précédentes **caractérisé en ce que** le corps (27) du support amovible (9) est une base mécanique formée d'une structure en cadre ou de plaques longitudinales (29) et transversales (30) extérieures et intérieures.

10. Système selon l'une quelconque des revendications précédentes **caractérisé en ce que** les moyens mécaniques d'interface (31) sont des anneaux, ou des ouvertures (32) donnant accès à des volumes intérieurs libres.

11. Système selon l'une quelconque des revendications précédentes **caractérisé en ce que** le dispositif (28) est réglable en hauteur par rapport au corps (27) du support amovible (9).

12. Système selon l'une quelconque des revendications précédentes **caractérisé en ce que** le dispositif (28) est une sellette normalisée qui comporte une entrée convergente (37), un logement (38) pour le pivot d'attelage (16) et un dispositif de verrouillage du pivot d'attelage (16).

13. Système selon l'une quelconque des revendications précédentes **caractérisé en ce que** le support amovible (9) comporte un moyen de débattement longitudinal du dispositif (28) par rapport au corps (27).

14. Système selon l'une quelconque des revendications précédentes **caractérisé en ce que** le support amovible (9) comporte un fût (34), monté pivotant sur le corps (27) et prolongé télescopiquement par un tronçon d'extrémité (35) sur l'extrémité libre duquel est montée à pivotement le dispositif (28).

15. Procédé de chargement d'une semi-remorque routière (15) équipée à l'avant d'un pivot d'attelage (16) et à l'arrière d'un train de roues (17), sur un wagon ferroviaire (1) comprenant un système de chargement / déchargement et de transport ferroviaire de semi-remorques routières selon l'une quelconque des revendications précédentes, procédé **caractérisé en ce qu'**il comporte les étapes suivantes :
- pivotement et immobilisation du plateau porteur pivotant (14) en position de chargement / déchargement ;
- déplacement de la semi-remorque (15) au moyen du tracteur routier (36) auquel elle est accouplée de manière à placer le train de roues (17) de la semi-remorque (15) sur le plateau porteur pivotant (14) ;
- désaccouplement de la semi-remorque (15) et du tracteur routier (36) et abandon de la semi-remorque (15) par le tracteur routier (36) ;
- préhension du corps (27) du support amovible (9) par un engin de manutention (24) utilisant les moyens mécaniques d'interface (31), et mise en place à l'aide de cet engin de manutention (24) du dispositif (28) du support amovible (9) sur le pivot d'attelage (16) de la semi-remorque (15) ;
- déplacement du support amovible (9) par l'engin de manutention (24) de façon à provoquer le pivotement de la semi-remorque (15) et du plateau porteur pivotant (14) jusqu'en position de transport ;
- mise en place du support amovible (9) sur la plateforme de réception (8) et immobilisation de celui-ci par coopération des moyens d'immobilisation (10) de la plateforme de réception (8) et des moyens d'immobilisation complémentaires (11) du support amovible (9).

16. Procédé de chargement d'une semi-remorque routière (15) équipée à l'avant d'un pivot d'attelage (16) et à l'arrière d'un train de roues (17), sur un wagon ferroviaire (1) comprenant un système de chargement / déchargement et de transport ferroviaire de semi-remorques routières selon l'une quelconque des revendications 1 à 14, procédé **caractérisé en ce qu'**il comporte les étapes suivantes :
- pivotement et immobilisation du plateau porteur pivotant (14) en position de chargement / déchargement ;
- préhension du corps (27) du support amovible (9) par un engin de manutention (24) utilisant les moyens mécaniques d'interface (31), et mise en place à l'aide de cet engin de manutention (24) du dispositif (28) du support amovible (9) sur le pivot d'attelage (16) d'une semi-remorque (15) préalablement désaccouplée et abandonnée par son tracteur routier (36) ;
- déplacement du support amovible (9) par l'engin de manutention (24) de façon à provoquer le déplacement de la semi-remorque (15) jusqu'à placer le train de roues (17) de la semi-remorque (15) sur le plateau porteur pivotant (14) ;
- déplacement du support amovible (9) par l'engin de manutention (24) de façon à provoquer le pivotement de la semi-remorque (15) et du plateau porteur pivotant (14) jusqu'en position de transport ;
- mise en place du support amovible (9) sur la plateforme de réception (8) et immobilisation de celui-ci par coopération des moyens d'immobilisation (10) de la plateforme de réception (8) et des moyens d'immobilisation complémentaires (11) du support amovible (9).

17. Procédé de chargement selon l'une quelconque des revendications 15 à 16 **caractérisé en ce qu'**il comporte en outre une étape de :
- réglage de la hauteur du dispositif (28) par rapport au corps (27) du support amovible (9) de façon que la semi-remorque (15) se retrouve sensiblement horizontale lorsqu'elle est chargée sur le wagon (1) en position de transport ferroviaire.

## Patentansprüche

1. Lade-/ Entladesystem und Eisenbahntransportsystem von Sattelanhängern, wobei das System mindestens einen Eisenbahnwaggon (1) und eine Stützvorrichtung (9) für den Zugsattelzapfen (16) eines Sattelanhängers (15) enthält, wobei dieser Waggon ein Fahrgestell (2) umfasst und dazu bestimmt ist, mindestens den Sattelanhänger (15) für den Transport auf der Schiene aufzunehmen, der vorne mit dem Zugsattelzapfen (16) und hinten mit einem Fahrwerk (17) ausgerüstet ist, wobei der Waggon (1) dieses Systems folgende Elemente umfasst:
- mindestens eine Trägerplatte (14), die bezogen auf das Fahrgestell (2) schwenkbar ist und dazu ausgelegt ist, das Fahrwerk (17) des Sattelanhängers (15) aufzunehmen, diese Trägerplatte (14) ist schwenkbar zwischen einer Transportposition, in der sie, bezogen auf den Waggon (1) längs ausgerichtet ist und einer Lade-/ Entladeposition, in der sie bezogen auf den Waggon (1) quer oder schräg ausgerichtet ist; und
- mindestens eine Aufnahmeplattform (8) zur Aufnahme der Stützvorrichtung (9) für den Zugsattelzapfen (16) des Sattelanhängers (15), die mit Mitteln zur Immobilisierung (10) dieser Stützvorrichtung (9) ausgestattet ist,
**dadurch gekennzeichnet, dass**:
- die Aufnahmeplattform (8) mit dem Fahrgestell (2) verbunden oder in es integriert ist, und bezogen auf das Fahrgestell feststehend ist und unabhängig von der schwenkbaren Trägerplatte (14) ist,
- bei der Stützvorrichtung (9), aufgenommen von der Aufnahmeplattform (8) für den Zugsattelzapfen (16) des Sattelanhängers (15), getragen vom Waggon (1), handelt es sich um eine bewegliche Stützvorrichtung (9),
und dadurch, dass die bewegliche Stützvorrichtung (9) umfasst:
- einen Körper (27), der von einem Fördergerät (24) ergriffen werden kann und dazu über mechanische Schnittstellenvorrichtungen (31) verfügt, die mit den Greifvorrichtungen dieses Fördergerätes (24) kompatibel sind, wobei der Körper (27) demontierbar auf der Aufnahmeplattform (8) des Waggons (1) montiert wird und zusätzliche Immobilisierungsmittel (11) enthält, die mit den Immobilisierungsmitteln (10) der Aufnahmeplattform (8) zusammenwirken, um die demontierbare Befestigung und das zeitweise Feststellen der beweglichen Stützvorrichtung (9) auf der Aufnahmeplattform (8) zu gewährleisten; und
- eine Vorrichtung (28), die in der Lage ist, den Zugsattelzapfen (16) des Sattelanhängers (15) aufzunehmen, zu stützen und zu immobilisieren.

2. System nach einem der vorhergehenden Ansprüche, **dadurch gekennzeichnet, dass** der Waggon (1) zwei schwenkbare Trägerplatten (14) und zwei Aufnahmeplattformen (8) umfasst, wodurch es möglich ist, gleichzeitig zwei Sattelanhänger (15) zu transportieren.

3. System nach einem der vorhergehenden Ansprüche, **dadurch gekennzeichnet, dass** es eine Verriegelungsvorrichtung enthält, die dazu dient, die schwenkbare Trägerplatte (14) in der Transportposition und in der Lade-/ Entladeposition zu immobilisieren.

4. System nach einem der vorhergehenden Ansprüche, **dadurch gekennzeichnet, dass** die schwenkbare Trägerplatte (14) eine Länge aufweist, die etwas länger als das Fahrwerk (17) des Sattelanhängers (15) ist.

5. System nach einem der vorhergehenden Ansprüche, **dadurch gekennzeichnet, dass** die schwenkbare Trägerplatte (14) an mindestens einem ihrer Enden eine Auffahrrampe (18) oder eine Endverlängerung umfasst, die einklappbar, kippbar, abgewinkelt oder teleskopisch sind.

6. System nach einem der vorhergehenden Ansprüche, **dadurch gekennzeichnet, dass** die schwenkbare Trägerplatte (14) schräge oder konvex gekrümmte Querränder (20) umfasst.

7. System nach einem der vorhergehenden Ansprüche, **dadurch gekennzeichnet, dass** die schwenkbare Trägerplatte (14) Seitenaufkantungen (41) oder feste, bewegliche oder abnehmbare Keile (21) umfasst, die dazu dienen, das Fahrwerk (17) des Sattelanhängers (15) zu immobilisieren, wenn dieser auf die schwenkbare Trägerplatte (14) geladen wurde.

8. System nach einem der vorhergehenden Ansprüche, **dadurch gekennzeichnet, dass** es Mittel zur vorübergehenden Verriegelung umfasst, die sich von den Immobilisierungsmitteln (10) oder den zusätzlichen Immobilisierungsmitteln (11) unterscheiden, oder zu diesen gehören.

9. System nach einem der vorhergehenden Ansprüche, **dadurch gekennzeichnet, dass** der Körper (27) der beweglichen Stützvorrichtung (9) eine mechanische Basis ist, die aus einer Rahmenkonstruktion oder einer Konstruktion mit inneren und äußeren Längs- (29) und Querplatten (30) gebildet wird.

10. System nach einem der vorhergehenden Ansprüche, **dadurch gekennzeichnet, dass** es sich bei den mechanischen Schnittstellenvorrichtungen (31) um Ringe handelt, oder um Öffnungen (32), die zu freien Innenräumen führen.

11. System nach einem der vorhergehenden Ansprüche, **dadurch gekennzeichnet, dass** die Vorrichtung (28), bezogen auf den Körper (27) der beweglichen Stützvorrichtung (9), in der Höhe verstellbar ist.

12. System nach einem der vorhergehenden Ansprüche, **dadurch gekennzeichnet, dass** es sich bei der Vorrichtung (28) um eine standardmäßige Sattelkupplung handelt, die einen konvergierenden Einlass (37), eine
Aussparung (38) für den Zugsattelzapfen (16) und eine Verriegelung des Zugsattelzapfens (16) enthält.

13. System nach einem der vorhergehenden Ansprüche, **dadurch gekennzeichnet, dass** die bewegliche Stützvorrichtung (9) ein Längsausschlagmittel für die Vorrichtung (28), bezogen auf den Körper (27), enthält.

14. System nach einem der vorhergehenden Ansprüche, **dadurch gekennzeichnet, dass** die bewegliche Stützvorrichtung (9) ein Gebinde (34) enthält, das schwenkbar auf dem Körper (27) montiert ist und teleskopisch durch ein Endstück (35) verlängert wird, an dessen freiem Ende die Vorrichtung (28) schwenkbar montiert ist.

15. Verfahren zum Laden eines Sattelanhängers (15), der vorne mit einem Zugsattelzapfen (16) und hinten mit einem Fahrwerk (17) ausgerüstet ist, auf einen Güterwagen (1), mit einem Lade-/ Entladesystem und einem Eisenbahntransportsystem von Sattelanhängern, nach einem der vorhergehenden Ansprüche, wobei das Verfahren **dadurch gekennzeichnet ist, dass** es die folgenden Schritte umfasst:
- Schwenken und Immobilisierung der schwenkbaren Trägerplatte (14) in der Lade-/ Entladeposition;
- Verschiebung des Sattelanhängers (15) mittels der Sattelzugmaschine (36), an den er angehängt ist, so dass das Fahrwerk (17) des Sattelanhängers (15) auf der schwenkbaren Trägerplatte (14) positioniert wird;
- Abkuppeln des Sattelanhängers (15) von der Sattelzugmaschine (36) und Zurücklassen des Sattelanhängers (15) durch die Sattelzugmaschine (36);
- Ergreifen des Körpers (27) der Stützvorrichtung (9) durch ein Fördergerät (24), unter Verwendung der mechanischen Schnittstellenvorrichtungen (31) und Positionierung, mittels dieses Fördergerätes (24), der Vorrichtung (28) der beweglichen Stützvorrichtung (9) am Zugsattelzapfen (16) des Sattelanhängers (15) ;
- Verschiebung der beweglichen Stützvorrichtung (9) durch das Fördergerät (24), so dass das Schwenken des Sattelanhängers (15) und der schwenkbaren Trägerplatte (14) in die Transportposition ausgelöst wird;
- Positionierung der beweglichen Stützvorrichtung (9) auf der Aufnahmeplattform (8) und ihre Immobilisierung durch Zusammenwirken der Immobilisierungsmittel (10) der Aufnahmeplattform (8) und der zusätzlichen Immobilisierungsmittel (11) der beweglichen Stützvorrichtung (9).

16. Verfahren zum Laden eines Sattelanhängers (15), der vorne mit einem Zugsattelzapfen (16) und hinten mit einem Fahrwerk (17) ausgerüstet ist, auf einen Güterwagen (1), der ein Lade-/ Entladesystem und ein Eisenbahntransportsystem von Sattelanhängern nach einem der Ansprüche 1 bis 14 enthält, wobei das Verfahren **dadurch gekennzeichnet ist, dass** es die folgenden Schritte umfasst:
- Schwenken und Immobilisierung der schwenkbaren Trägerplatte (14) in der Lade-/ Entladeposition;
- Ergreifen des Körpers (27) der Stützvorrichtung (9) durch ein Fördergerät (24), unter Verwendung der mechanischen Schnittstellenvorrichtungen (31) und Positionierung, mittels dieses Fördergerätes (24) der Vorrichtung (28) der beweglichen Stützvorrichtung (9) am Zugsattelzapfen (16) eines vorher von seiner Sattelzugmaschine (36) abgekoppelten und von dieser zurückgelassenen Sattelanhängers (15):
- Verschiebung der beweglichen Stützvorrichtung (9) durch das Fördergerät (24), so dass das Verschieben des Sattelanhängers (15) ausgelöst wird, bis das Fahrwerk (17) des Sattelanhängers (15) auf der schwenkbaren Trägerplatte (14) positioniert ist;
- Verschiebung der beweglichen Stützvorrichtung (9) durch das Fördergerät (24), so dass das Schwenken des Sattelanhängers (15) und der schwenkbaren Trägerplatte (14) bis in die Transportposition ausgelöst wird;
- Positionierung der beweglichen Stützvorrichtung (9) auf der Aufnahmeplattform (8) und ihre Immobilisierung durch Zusammenwirken der Immobilisierungsmittel (10) der Aufnahmeplattform (8) und der zusätzlichen Immobilisierungsmittel (11) der beweglichen Stützvorrichtung (9).

17. Ladeverfahren nach einem der Ansprüche 15 bis 16, **dadurch gekennzeichnet, dass** es außerdem eine Etappe der Höheneinstellung der Vorrichtung (28), bezogen auf den Körper (27) der beweglichen Stützvorrichtung (9) enthält, so dass der Sattelanhänger (15) sich in deutlich horizontaler Position befindet, wenn er auf den Waggon (1) in Güterzugtransportposition geladen wird.

## Claims

1. System for loading/unloading and rail transportation of road-hauled semi-trailers; system incorporating at least one railway wagon (1) and a mounting (9) for the kingpin (16) of a semi-trailer (15), this wagon having a chassis (2) and being intended to accommodate, for rail transportation, at least the road-hauled semi-trailer (15) fitted with the kingpin (16) at the front and a wheel assembly (17) at the rear, with the wagon (1) according to the system comprising:
- at least one turntable (14) that pivots in relation to the chassis (2), that is designed to accommodate the wheel assembly (17) of the semi-trailer (15), this turntable (14) able to be pivoted between a transportation position in which it is positioned longitudinally relative to the wagon (1), and a loading/unloading position in which it is oriented transversely or obliquely in relation to the wagon (1); and
- at least one accommodating platform (8) designed to accommodate the mounting (9) for the kingpin (16) of the semi-trailer (15) and having an immobilizing system (10) for immobilizing the said mounting (9);
**characterized in that**:
- the accommodating platform (8) is connected to or integrated with the chassis (2), and is fixed in relation to this chassis thereto and independent of the pivoting turntable (14);
- the mounting (9) accommodated by the accommodating platform (8) for the kingpin (16) of the semi-trailer (15) borne by the wagon (1) is a detachable mounting (9);
and **in that** the said detachable mounting (9) comprises:
- a body (27) that is grippable by a handling machine (24) and, for this, comprises a mechanical interface system (31) that is compatible with the gripping system of the handling machine (24), a body (27) which is assembled in a detachable manner on the accommodating platform (8) of the wagon (1), and which comprises a complementary immobilizing system (11) that interoperates with the immobilizing system (10) of the accommodating platform (8) to detachably secure and temporarily restrain the detachable mounting (9) on the accommodating platform (8); and
- a system (28) designed to accommodate, support and immobilize the kingpin (16) of the semi-trailer (15).

2. System according to any one of the preceding claims, **characterized in that** the wagon (1) comprises two pivoting turntables (14) and two accommodating platforms (8) enabling it to simultaneously transport two semi-trailers (15).

3. System according to any one of the preceding claims, **characterized in that** it comprises a locking system for immobilizing the pivoting turntable (14) in the transportation position and in the loading/unloading position.

4. System according to any one of the preceding claims, **characterized in that** the pivoting turntable (14) has a length slightly greater than that of the wheel assembly (17) of the semi-trailer (15).

5. System according to any one of the preceding claims, **characterized in that** the pivoting turntable (14) comprises, at at least one of its extremities, an access ramp (18) or an end extension that is retractable, swinging, articulated or telescopic.

6. System according to any one of the preceding claims, **characterized in that** the pivoting turntable (14) has transversal edges (20) that are oblique or curved in a convex form.

7. System according to any one of the preceding claims, **characterized in that** the pivoting turntable (14) has lateral edges (41) or shims (21) that are fixed, movable or removable, for immobilizing the wheel assembly (17) of the semi-trailer (15) when it is loaded on the pivoting turntable (14).

8. System according to any one of the preceding claims, **characterized in that** it comprises a temporary locking system that is separate from or integral with the immobilizing system (10) or complementary immobilizing system (11), in addition to the immobilizing system (10) or complementary immobilizing system (11).

9. System according to any one of the preceding claims, **characterized in that** the body (27) of the detachable mounting (9) is a mechanical base, composed of a frame structure or of exterior and interior longitudinal (29) and transversal (30) plates.

10. System according to any one of the preceding claims, **characterized in that** the mechanical interface system (31) is composed of rings or openings (32) giving access to free interior spaces.

11. System according to any one of the preceding claims, **characterized in that** the system (28) is adjustable heightwise in relation to the body (27) of the detachable mounting (9).

12. System according to any one of the preceding claims, **characterized in that** the system (28) is a standardized hitch having a convergent entry (37), a housing (38) for the kingpin (16), and a locking system for the kingpin (16).

13. System according to any one of the preceding claims, **characterized in that** the detachable mounting (9) comprises a means of longitudinal displacement of the system (28) in relation to the body (27).

14. System according to any one of the preceding claims, **characterized in that** the detachable mounting (9) comprises a shaft (34) pivotally assembled on the body (27) and extended telescopically by an end section (35) on the free extremity of which the system (28) is pivotally assembled.

15. Loading process for loading a road-hauled semi-trailer (15) equipped with a kingpin (16) at the front and a wheel assembly (17) at the rear, on a railway wagon (1) forming part of a system for loading/unloading and rail transportation of road-hauled semi-trailers according to any one of the preceding claims, **characterized in that** it comprises the following steps:
- pivoting and immobilization of the pivoting turntable (14) in the loading/unloading position;
- movement of the semi-trailer (15) by means of the road haulage tractor (36) to which it is coupled, so as to position the wheel assembly (17) of the semi-trailer (15) on the pivoting turntable (14);
- uncoupling of the semi-trailer (15) and road haulage tractor (36), and departure from the semi-trailer (15) by the road haulage tractor (36);
- gripping of the body (27) of the detachable mounting (9) by a handling machine (24), using the mechanical interface system (31) and positioning, using the handling machine (24), of the system (28) of the detachable mounting (9) on the kingpin (16) of the semi-trailer (15);
- movement of the detachable mounting (9) by the handling machine (24) so as to cause the pivoting of the semi-trailer (15) and of the pivoting turntable (14) into the transportation position;
- positioning of the detachable mounting (9) on the accommodating platform (8), and immobilization thereof by interoperation of the immobilizing system (10) of the accommodating platform (8) with the complementary immobilizing system (11) of the detachable mounting (9).

16. Loading process for loading a road-hauled semi-trailer (15) equipped with a kingpin (16) at the front and with a wheel assembly (17) at the rear, on a railway wagon (1) forming part of a system for loading/unloading and rail transportation of road-hauled semi-trailers according to any one of claims 1 to 14, **characterized in that** it comprises the following steps:
- pivoting and immobilization of the pivoting turntable (14) in the loading/unloading position;
- gripping of the body (27) of the detachable mounting (9) by a handling machine (24) using the mechanical interface system (31), and positioning, using this handling machine (24), of the system (28) of the detachable mounting (9) on the kingpin (16) of a semi-trailer (15) previously uncoupled from and left by its road haulage tractor (36);
- movement of the detachable mounting (9) by the handling machine (24), so as to cause the movement of the semi-trailer (15) until placement of the wheel assembly (17) of the semi-trailer (15) on the pivoting turntable (14);
- movement of the detachable mounting (9) by the handling machine (24) so as to cause the pivoting of the semi-trailer (15) and of the pivoting turntable (14) into the transportation position;
- positioning of the detachable mounting (9) on the accommodating platform (8), and immobilization thereof by interoperation of the immobilizing system (10) of the accommodating platform (8) with the complementary immobilizing system (11) of the detachable mounting (9).

17. Loading process according to any one of claims 15 to 16, **characterized in that** it also comprises a step of:
- adjustment of the height of the system (28) in relation to the body (27) of the detachable mounting (9) so that the semi-trailer (15) is positioned substantially horizontally when it is loaded on the wagon (1) in the rail transportation position.
